# EUROPÄISCHE PATENTSCHRIFT

(11) **EP 0 735 940 B1**
(45) Veröffentlichungstag und Bekanntmachung des Hinweises auf die Patenterteilung: **02.09.1998**
(21) Anmeldenummer: 95900132.2
(22) Anmeldetag: 10.11.1994
(51) Int. Cl.: B29B 9/06, B01J 2/18

(54) **VERFAHREN UND VORRICHTUNG ZUR HERSTELLUNG VON AUS KUNSTSTOFF BESTEHENDEN PARTIKELN**
PROCESS AND DEVICE FOR PRODUCING PLASTIC PARTICLES
PROCEDE ET DISPOSITIF DE PRODUCTION DE PARTICULES EN PLASTIQUE

(30) Priorität: 10.11.1993 DE 4338212
(43) Veröffentlichungstag der Anmeldung: 09.10.1996
(73) Patentinhaber: Brandau, Egbert, Dr., 63755 Alzenau (DE)
(72) Erfinder: THEISEN, Wolfgang, D-63517 Rodenbach (DE); BRANDAU, Egbert, D-63755 Alzenau (DE); HUNKE, Friedrich, D-63762 Grossostheim (DE)
(86) Internationale Anmeldenummer: EP9403708
(87) Internationale Veröffentlichungsnummer: WO9513176

(56) Entgegenhaltungen:
- EP-A- 0 467 221
- EP-A- 0 541 815
- DE-A- 1 454 888
- DE-A- 1 604 362
- DE-A- 2 328 019
- DE-A- 2 610 175
- US-A- 4 390 484
- PATENT ABSTRACTS OF JAPAN vol. 12, no. 52 (M-668) 17. Februar 1988 & JP,A,62 199 408 (KASAMATSU TADASHI) 3. September 1987

## Beschreibung

Die Erfindung bezieht sich auf ein Verfahren zur Herstellung von aus Kunststoff bestehenden Partikeln, bei dein aus dem in fließfähiger Konsistenz vorliegenden Kunststoff mittels einer zumindest eine Austrittsöffnung aufweisenden Düseneinrichtung Tropfen gebildet werden, die anschließend eine Fallstrecke durchfallen, an deren Ende die Tropfen in eine Kühlflüssigkeit gelangen, in der die Tropfen abgekühlt werden.

Ferner bezieht sich die Erfindung auf eine Vorrichtung zur Herstellung von aus Kunststoff bestehenden Partikeln umfassend eine zumindest eine Austrittsöffnung aufweisende Düseneinrichtung, aus der in fließfähiger Konsistenz zugeführter Kunststoff in Form von Tropfen austritt, sowie eine im Abstand zu der Düseneinrichtung eine Kühlflüssigkeit enthaltende Auffangeinrichtung für die aus dem Kunststoff gebildeten Partikel.

Um streu- bzw. schüttfähige polymere Stoffe herzustellen, werden sogenannte Strang-Granulatoren benutzt, die sich überaus bewährt haben. Hierdurch kann ein gleichmäßiges Granulat aus thermoplastischen Kunststoffen staubfrei hergestellt werden. Dabei wird über einen Stranggießer zu Fäden extrudierter Kunststoff einer wasserbenetzten Ablaufrinne und dann einem Granulator zugeführt, in dem die Fäden im noch weichen Zustand zu zylinderförmigen Partikeln getrennt werden. Die Partikel durchlaufen dann eine Nachkühlstrecke, um anschließend von der Flüssigkeit getrennt zu werden (DE 22 18 21 O C2).

Auch wenn sich entsprechende Strang-Granulatoren bewährt haben und einen hohen Durchsatz ermöglichen, liegen immer 3 Phasen des Polymers vor, nämlich Schmelze, Stränge und Granulat. Jede Phase hat spezielle Eigenschaften und erfordert spezielle Behandlungsmethoden.

Ein Verfahren und eine Vorrichtung der eingangs genannten Art sind der GB 1,195,867 zu entnehmen. Dabei kann ein zu Partikeln auszubildender Kunststoff durch Düsen gepreßt werden, um sodann mittels mechanischer Hilfsmittel wie rotierender Messer geteilt zu werden. Alternativ besteht die Möglichkeit, einen mit fließfähigem Kunststoff gefüllten Behälter mit einer Membran zu verschließen, die periodisch bewegt wird, um Kunststoff auf diese Weise durch eine Düsenplatte mit Öffnungen sehr geringen Querschnitts hindurchzudrücken. Bei Druckentlastung können Kunstofftropfen die Düsenplatte verlassen.

Nach dem der DE-OS 1 604 362 zu entnehmenden Verfahren zur Herstellung von verschäumbarem Polystyrol wird Kunststoffmasse durch Austrittsöffnungen hindurchgedrückt, um sodann unmittelbar in eine Flüssigkeit zu gelangen. Innerhalb der Flüssigkeit erfolgt eine Schwingungsanregung dergestalt, daß der die Öffnung verlassende Kunststoffstrang in Partikel zerteilt wird.

Bei einem Verfahren und einer Vorrichtung zum Pellitisieren von schmelzbaren Substanzen wie insbesondere Pech wird nach der DE-OS 1 542 121 vorgeschlagen, ein in einer Vorlage des zu vertropfenden Mediums vorhandenes Düsenrohr periodisch zu öffnen bzw. zu schließen, um auf diese Weise Tropfen auszubilden, die eine Strecke durchfallen, um sodann in eine Kühlflüssigkeit zu gelangen.

Aus der DE 26 10 175 B1 ist eine Vorrichtung zur Erzeugung von Tropfen bekannt, bei der zum Beispiel thermoplastische Kunststoffe mittels einer an einen Schwingungserzeuger angeschlossenen Düse vertropft werden. Um zu vermeiden, daß die aus der Düse in einer Linie hintereinander austretenden Tropfen in dichter Folge nacheinander auf den Boden eines Auffanggefäßes aufschlagen, wodurch eine Verformung erfolgen kann, wird vorgeschlagen die Tropfen elektrisch aufzuladen und entlang einer Fallstrecke derart abzulenken, daß die Fallwege der Tropfen beeinflußt bzw. gesteuert werden können.

Der vorliegenden Erfindung liegt die Aufgabe zugrunde, ein Verfahren und eine Vorrichtung der eingangs beschriebenen Art so weiterzubilden, daß mit einfachen Maßnahmen aus Kunststoff Kugeln gleichmäßiger Geometrie hergestellt werden, wobei im Vergleich zum Stand der Technik die Anzahl der Verfahrensschritte reduziert werden soll.

Verfahrensmäßig wird das Problem dadurch gelöst, daß der Kunststoff schmelzflüssig durch Schwingungsanregung der Düseneinrichtung vertropft wird und daß die Kühlflüssigkeit auf die die Fallstrecke durchfallenden Tropfen derart ausgerichtet wird, daß die Tropfen tangential oder in etwa tangential oder zumindest unter einem spitzen Winkel zur Flüssigkeitsoberfläche in diese eintreten.

Überraschenderweise hat sich gezeigt, daß man flüssigen Kunststoff vertropfen kann, wobei die sich während des Durchfallens der Fallstrecke ausgebildeten Tropfen eine Kugelgeometrie aufweisen, die während des Aushärtens des Kunststoffs in der Kühlflüssigkeit nicht verändert wird, indem die Kühlfüssigkeit derart in bezug auf die auszuhärtenden Kunststofftropfen geführt wird, daß die Tropfen tangential oder in etwa tangential oder zumindest unter einen, spitzen Winkel zur Flüssigkeitsoberfläche in sie eintreten. Die so hergestellten Kugeln liegen in einem engen Kornspektrum.

Die Fallstrecke ist dabei variabel und so bemessen, daß die noch plastischen Partikel im freien Fall eine Kugelgeometrie ausbilden können.

Um sicherzustellen, daß ein Verspröden verbunden mit Riss- und Staubbildung der Kugeln durch ein plötzliches Abschrecken in der Kühlflüssigkeit unterbleibt, sieht eine Weiterbildung der Erfindung vor, daß die Kühlflüssigkeit eine Temperatur aufweist, die im Bereich der Vicat-Temperatur des vertropften Kunststoffs liegt.

Als besonders vorteilhaft hat sich erwiesen, wenn die Tropfen in ein zumindest einen laminaren Strömungsanteil aufweisende strömende Flüssigkeitsschicht eintreten. Ferner sollte die Strömungsrichtung zur Fallrichtung der eine Kugelform aufweisenden Tropfen gleichgerichtet sein.

Durch die laminare Strömung wird sichergestellt, daß die Tropfen innerhalb der Flüssigkeitsschicht zunächst separiert bleiben, d. h. ein Verkleben ist ausgeschlossen. Nachdem zumindest oberflächlich eine hinreichende Aushärtung erfolgt ist, sollte die Kühl- und Transportflüssigkeit zumindest einen turbulenten Anteil haben. Hierdurch wird ein gewünscht schnelles Abkühlen der Kugeln und ein Ableiten der Wärme ermöglicht.

Um die Ausbildung der Kugelgeometrie der Tropfen zu unterstützen, sieht eine Weiterbildung der Erfindung vor, daß den Tropfen während des Durchfallens der Fallstrecke Energie zugeführt wird. So können die Tropfen einer elektromagnetischen Strahlung ausgesetzt werden. Dabei sollte die elektromagnetische Strahlung einen bevorzugten Spektralbereich aufweisen, der einer Absorptionsbande des vertropften Kunststoffs entspricht.

Auch besteht die Möglichkeit, die Tropfen mit einem Laserstrahl zu beaufschlagen oder innerhalb der Fallstrecke elektrostatisch aufzuladen. All diese Maßnahmen unterstützen die Kugelausbildung der Tropfen.

Eine Vorrichtung zur Herstellung von aus Kunststoff bestehenden Partikeln umfassend eine zumindest eine Austrittsöffnung aufweisende Düseneinrichtung, aus der in fließfähiger Konsistenz zugeführter Kunststoff in Form von Tropfen austritt, sowie eine im Abstand zu der Düseneinrichtung eine Kühlflüssigkeit enthaltende Auffangeinrichtung für die aus dem Kunststoff gebildeten Partikel, zeichnet sich dadurch aus, daß die Düseneinrichtung eine in Vibrationsschwingungen versetzte Düsenplatte ist, die mit ihren Austrittsöffnungen auf einen Kühlflüssigkeitsbereich der Auffangeinrichtung ausgerichtet ist, in dem die Tropfen tangential oder in etwa tangential oder zumindest unter einem spitzen Winkel zur Flüssigkeitesoberfläche eintreten.

Um sicherzustellen, daß die Tropfen beim Eintreten in die Kühlflüssigkeit nicht abgeplattet werden, sieht eine Weiterbildung der Erfindung vor, daß das Auffanggefäß eine mit einer Flüssigkeitsschicht bedeckte trichterförmige Öffnung aufweist oder dieser zugeordnet ist, wobei die Flüssigkeitsschicht lotrecht unterhalb der Austrittsöffnungen der Düseneinrichtung oder -platte verläuft.

Um ein zu Verformungen der Tropfen nicht führendes Eintreten in die Kühlflüssigkeit sicherzustellen, besteht auch die Möglichkeit, in dem Auffanggefäß eine pilzförmig ausgebildete Flüssigkeitsverteileinrichtung koaxial zu Düseneinrichtung anzuordnen, die oberflächlich mit einer Flüssigkeitsschicht bedeckt ist, in die die Tropfen fallen.

Sofern eine Flüssigkeitsschicht zum Abbremsen der Tropfen benutzt wird, sollte diese zumindest einen laminaren Strömungsanteil aufweisen, wohingegen die Strömung innerhalb der Kühlflüssigkeit selbst turbulent sein sollte.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispeilen.

Es zeigen:
- Fig. 1: eine Prinzipdarstellung einer ersten Ausführungsform einer Vorrichtung zum Vertropfen von Kunststoff und
- Fig. 2: eine Prinzipdarstellung einer zweiten Ausführungsform einer Vorrichtung zum Vertropfen von Kunststoff.

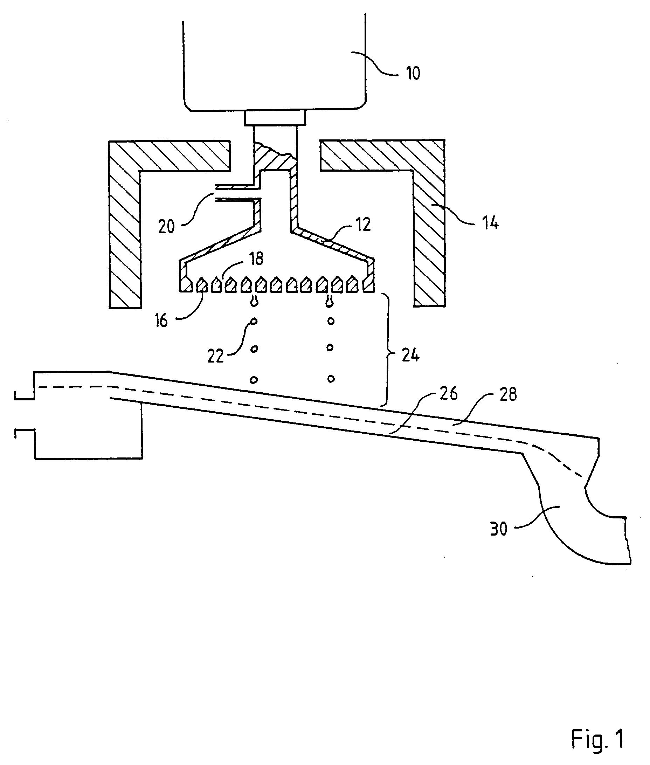

In Fig. 1 ist rein prinzipiell eine Vorrichtung dargestellt uni Kunststoff, der im Temperaturbereich zwischen 100° und 300°C gut fließfähig ist, also polymere Verbindungen zu Kugeln zu vertropfen.

Die erfindungsgemäße Vorrichtung umfaßt einen von einem Schwingungserreger (10) in Schwingung versetzten Düsenkopf (12), der in einer Temperierkammer (14) auf einem bestimmten Temperaturniveau gehalten werden kann. Der Düsenkopf wird von einer Düsenplatte (16), die eine Vielzahl von Düsenbohrungen (18) aufweist, abgeschlossen.

Über die Düsenbohrungen (18), die vorzugsweise auf konzentrisch zueinander verlaufenden Kreisen angeordnet sind, tritt eine dem Düsenkopf (12) über den Anschluß (20) zugeführte Kunststoffschmelze aus, wobei pro Öffnung und pro Zeiteinheit die gleiche Flüssigkeitsmenge austritt.

Die durch diese Maßnahme erzeugten Tropfen (22) durchfallen eine definierte Fallstrecke (24), in der die Tropfen (22) hinreichend Zeit haben, aufgrund ihrer Kohäsionskräfte eine Kugelform einzunehmen. Gegebenenfalls erfolgt in der Fallstrecke (24) eine Begleitbeheizung, um sicherzustellen, daß die Viskosität der Tropfen während der Phase der Ausbildung der Kugeln nicht ansteigt. Es muß also sichergestellt sein, daß die Tropfen die Kugelform einnehmen können. Am Ende der Fallstrecke (24) treten die zu Kugeln ausgeformten Tropfen (22) in eine Kühl- und/oder Transportflüssikeit ein, die im Ausführungsbeispiel nach Fig. 1 als eine entlang einer Innenwandung einer Ablaufrinne (28) strömenden Flüssigkeitsschicht (26) ausgebildet ist. Die Strömung der Flüssigkeitsschicht (26) ist laminar bis leicht turbulent, wohingegen die Strömung in einem sich anschließenden Ableitrohr (30) für einen guten Wärmetransport aus den Kunststoffpartikeln turbulent sein sollte.

Über das Ableitrohr (30) werden die als Kugeln ausgebildeten Kunststoffpartikel einer Nachkühlstrecke zugeführt, von der die Partikel über z.B. ein Vibrationssieb aus der Flüssigkeit entfernt werden.

Sofern der vertropfte Kunststoff zur Versprödung beim Abkühlen neigt, weist die Kühlflüssigkeit (26) eine Temperatur auf, die im Bereich der Vicat-Temperatur des vertropften Kunststoffs liegt, also im Bereich von in etwa 60 °C bis 80 °C.

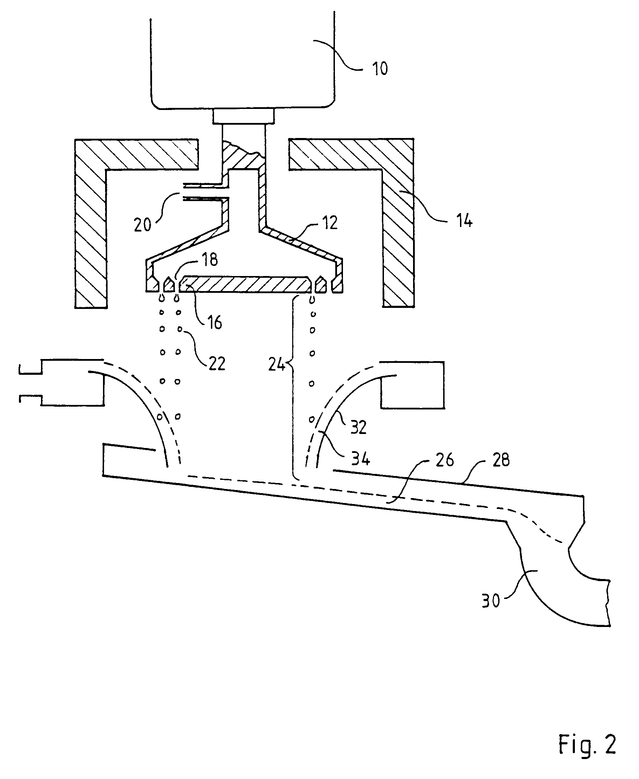

Um sicherzustellen, daß die Tropfen (22) beim Eintreffen in die Kühl- bzw. Transportflüssigkeit (26) nicht abgeplattet werden, also eine geometrische Veränderung erfahren, ist gemäß dem Ausführungsbeispiel nach der Fig. 2 vorgesehen, daß die Tropfen (22) unter einen, spitzen Winkel oder gegebenenfalls tangential in eine Flüssigkeitsschicht (34) eintreten, deren Strömungsrichtung zu der Tropfenfallrichtung gleichgerichtet ist. Dabei sollte die Strömungsschicht zumindest einen laminaren Anteil aufweisen, um während des Transports der Tropfen zu der in der Ablaufrinne (28) strömenden Flüssigkeit (26) ein Berühren untereinander auszuschließen, wodurch gegebenenfalls ein Verkleben erfolgen könnte.

Um eine entsprechende Flüssigkeitsschicht (34) auszubilden, ist eine trichterförmige Anordung (32) vorgesehen, über die die Flüssigkeitschicht (34) der Rinne (28) zugeführt wird.

Im Ausführungsbeispiel sind Wandflächen der trichterförmigen Anordnung (32) in bezug auf die Fallstrecke (24) konvex ausgebildet. Selbstverständlich sind auch andere Geometrien geeignet, um eine zu der Tropfenfallrichtung gleichgerichtete strömende Flüssigkeitsschicht (34) auszubilden. So kann z. B. der Trichter (32) eine Kegelform aufweisen.

Alternativ besteht die Möglichkeit, unterhalb des Düsenkopfes (12) eine pilzförmige Flüssigkeitsverteileinrichtung anzuordnen, entlang deren Oberflächen eine der Schicht (34) entsprechende Kühlflüssigkeitsschicht ausgebildet wird, die laminar oder im wesentlichen laminar strömt. Dabei weist die pilzförmige Anordnung einen Durchmesser derart auf, daß die Tropfen im im wesentlichen vertikal verlaufenden Bereich der Flüssigkeitsschicht in diese eintreten, wodurch das Geometrieveränderungen vermeidende Eintauchen in die Flüssigkeit sichergestellt ist.

Zu der Fig. 1 ist noch anzumerken, daß die Ablaufrinne (28), in der die die Kühl- bzw. Transportflüssigkeit (26) strömt, geneigt ist. Hierdurch werden auf einfache Weise die in der Kühl- bzw. Transportflüssigkeit (26) erstarrten Kugeln zu einem Auffangbehältnis gefordert, von der sie aus der Kühl- bzw. Transportflüssigkeit (26) entnommen und anschließend getrocknet werden.

Zu erwähnen ist noch, daß im Bereich der Fallstrecke (24), also in dem Bereich, in dem die Tropfen (22) frei beweglich sind und noch nicht in die Flüssigkeitsschicht (34) eingetreten sind, eine nicht dargestellte Heizung vorgesehen sein kann, um eine Begleitheizung für die Tropfen (22) zur Verfügung zu stellen. Hierdurch wird sichergestellt, daß die Viskosität der sich zu einer Kugel ausformenden Tropfen (22) nicht derart verändert werden kann, daß eine Oberflächenerstarrung in einem Umfang erfolgen könnte, die die Tropfenform verändert.

Die Begleitheizung könnte z. B. durch Infrarotstrahler zur Verfügung gestellt werden.

Von der Ablaufrinne (28) gelangen die kugelförmigen Kunststoffpartikel über ein Ablaufrohr (30) in eine Nachkühlzone, uni sodann aus der Kühlflüssigkeit entfernt zu werden.

Innerhalb der Fallstrecke (24), also bevor die Tropfen (22) in die Kühlflüssigkeit eindringen, kann den Tropfen (22) Energie zugeführt werden, um die Ausbildung der gewünschten Kugelform zu beschleunigen bzw. zu verbessern. Hierzu können die Tropfen (22) mit einem Laserstrahl beaufschlagt werden. Auch besteht die Möglichkeit, die Tropfen (22) elektrostatisch aufzuladen. Als weitere Möglichkeit ist vorgesehen, daß die Tropfen mit einer elektromagnetischen Strahlung eines Spektralbereichs bestrahlt werden, der einer Absorptionsbande des vertropften Kunststoffs entspricht.

Weitere Einzelheiten, Vorteile und Merkmale der Erfindung ergeben sich auch aus den nachfolgenden Beispielen.

### Beispiel 1:

Mit einer 10-Lochdüse (Loch-Durchmesser = 1,2 mm) wurden 10 kg/h Polyethylenwachs vertropft.

Die Polymertemperatur betrug 150 °C. Die Schwingfrequenz betrug 100 Hz. Dabei traten Beschleunigungen von 7,7 g auf. Die Fallhöhe (Luftstrecke) betrug 180 mm.

### Beispiel 2:

Ein Phenolharz in Resolform, welches bei 200 °C eine Viskosität von 5 Pa·s aufweist, wurde unter den gleichen Bedingungen wie im Beispiel 1 vertropft. Das Polymer wurde nur kurze Zeit auf Gießtemperatur erhitzt. Zum Abkühlen wurde Warmwasser von 60 °C benutzt, um die einsetzende Versprödung (Vernetzung) des Resols gering zu halten.

Die erhaltenen Granulate haben nach ca. 4 Sekunden die Wassertemperatur erreicht. Sie wurden vom Wasser getrennt und auf Raumtemperatur abgekühlt. Es konnte festgestellt werden, daß das Harz durch diese Behandlung nur sehr wenig versprödet wurde. Ferner ist nur ein geringer Anteil des Resols in den Resitolzustand übergegangen. Die erhaltenen Granulate wiesen ein Kornspektrum von 1,6 bis 2,6 mm auf.

### Beispiel 3:

25 kg Novolakharz (ohne Hexamethylentetraminzusatz) mit einem Schmelzintervall von 107 ± 8 °C wurden auf 200 °C erhitzt und mit einer 12-Lochdüse (Durchmesser = 1,0 mm) bei einer Frequenz von 460 Hz vertropft. Im ersten Teil der Fallstrecke wurden die Flüssigkeitsstrahlen zusätzlich mit Infrarotstrahlen erhitzt, um die Viskosität noch weiter zu erniedrigen.

Die erhaltenen Granulatkugeln zeigten Durchmesser zwischen 1,4 und 2,2 mm.

### Beispiel 4:

25 kg Novolakharz mit einem Schmelzintervall von 72 ± 3 °C wurden auf 170 °C erhitzt und entsprechend dem Beispiel 3 vertropft. Eine Laserbestrahlung im oberen Teil der Tropfenbildung unterstützte die Viskositätseinstellung zur optimalen Kugelausbildung.

Die erhaltenen Novolakgranulatkugeln wiesen ein Korngrößenspektrum zwischen 1,5 und 1,9 mm auf.

### Beispiel 5:

25 kg Novolakharz mit einem Schmelzintervall von 42 ± 2 °C, wurden auf 130 °C erhitzt und entsprechend der Vertropfungsparameter nach Beispiel 3 vertropft. Allerdings wurde die Infrarotbestrahlung weggelassen.

Die fertigen Granulatkugeln besaßen einen Korndurchmesser von 1,3 bis 1,8 mm.

### Beispiel 6:

20 kg Bisphenol-Epoxidharz wurden auf 160 °C erhitzt und mit einer 32-Lochdüsenplatte (Durchmesser jeder Düse 1,5 mm) vergossen. Die Platte wurde mit Rechteckimpulsen einer Frequenz von 180 Hz angeregt. Das erhaltene Granulat zeigte eine Korngröße zwischen 1,9 und 2,4 mm.

### Beispiel 7:

20 kg cycloaliphatisches Epoxidharz wurde auf 190 °C erhitzt und wie in Beispiel 6 vertropft. Die erhaltenen Granulate hatten Durchmesser von 1,8 bis 2,3 mm.

### Beispiel 8:

15 kg Phenacryatharz (Vinylester) wurden unter Berücksichtigung der Parameter von Beispiel 6 bei 220 °C vertropft. Die Korngröße der erhaltenen Granulate betrug 2 bis 2,5 mm.

### Beispiel 9:

20 kg Polybutylmethacrylat wurden bei 160 °C mit einer sechsfachen Düsenplatte (Düsendurchmesser = 0,8 mm) bei 370 Hz entsprechend Beispiel 6 vertropft. Die erhaltenen Körnungen zeigten Durchmesser von 1,2 bis 1,6 mm auf.

### Beispiel 10:

25 kg gesättigtes Polyesterharz wurde bei 180 °C wie in Beispiel 9 vertropft. Die Korngrößen der erhaltenen Granulate bewegten sich zwischen 1,3 bis 1,7 mm.

## Patentansprüche

1. Verfahren zur Herstellung von aus Kunststoff bestehenden Partikeln, bei dem aus dem in fließfähiger Konsistenz vorliegenden Kunststoff mittels einer zumindest eine Austrittsöffnung aufweisenden Düseneinrichtung (12) Tropfen (22) gebildet werden, die anschließend eine Fallstrecke (24) durchfallen, an deren Ende die Tropfen in eine Kühlflüssigkeit (26, 34) gelangen, in der die Tropfen abgekühlt werden,
**dadurch gekennzeichnet**,
daß der Kunststoff schmelzflüssig durch Schwingungsanregung der Düseneinrichtung (12) vertropft wird und daß die Kühlflüssigkeit (26, 34) auf die die Fallstrecke (24) durchfallenden Tropfen (22) derart ausgerichtet wird, daß die Tropfen tangential oder in etwa tangential oder zumindest unter einem spitzen Winkel zur Flüssigkeitsoberfläche in diese eintreten.

2. Verfahren nach Anspruch 1,
**dadurch gekennzeichnet**,
daß die Kühlflüssigkeit (26, 34) eine Temperatur aufweist, die im Bereich der Vicat-Temperatur des vertropften Kunststoffs liegt.

3. Verfahren nach zumindest einem der vorhergehenden Ansprüche,
**dadurch gekennzeichnet**,
daß die Tropfen (22) in eine zumindest einen laminaren Strömungsanteil aufweisende strömende Flüssigkeitsschicht (34) eintreten.

4. Verfahren nach zumindest einem der vorhergehenden Ansprüche,
**dadurch gekennzeichnet**,
daß die Tropfen (22) in der Fallstrecke (24) einer elektromagnetischen Strahlung ausgesetzt werden.

5. Verfahren nach zumindest einem der vorhergehenden Ansprüche,
**dadurch gekennzeichnet**,
daß die Tropfen (22) mit einer elektromagnetischen Strahlung bestrahlt werden, die zumindest einen Hauptspehtralbereich aufweist, der einer Absorptionsbande des vertropften Kunststoffs entspricht.

6. Verfahren nach zumindest einem der vorhergehenden Ansprüche,
**dadurch gekennzeichnet**,
daß die Kunststofftropfen zusätzlich mit Laserstrahlung erhitzt werden.

7. Verfahren nach zumindest einem der vorhergehenden Ansprüche,
**dadurch gekennzeichnet**,
daß zur Schwingungsanregung eine Sinus-, Sägezahn- oder eine Rechteckimpulsform benutzt wird.

8. Vorrichtung zur Herstellung von aus Kunststoff bestehenden Partikeln umfassend eine zumindest eine Austrittsöffnung aufweisende Düseneinrichtung (12), aus der in fließfähiger Konsistenz zugeführter Kunststoff in Form von Tropfen (22) austritt, sowie eine im Abstand zu der Düseneinrichtung eine Kühlflüssigkeit enthaltende Auffangeinrichtung für die aus dem Kunststoff gebildeten Partikel,
**dadurch gekennzeichnet**,
daß die Düseneinrichtung (12) eine in Vibrationsschwingungen versetzte Düsenplatte ist, die mit ihren Austrittsöffnungen auf einen Kühlflüssigkeitsbereich der Auffangeinrichtung (26) ausgerichtet ist, in dem die Tropfen tangential oder in etwa tangential oder zumindest unter einem spitzen Winkel zur Flüssigkeitesoberfläche eintreten.

9. Vorrichtung nach Anspruch 8,
**dadurch gekennzeichnet**,
daß die Düseneinrichtung in Form einer Düsenplatte (16) eine Vielzahl von Austrittsöffnungen (18) aufweist.

10. Vorrichtung nach zumindest einem der vorhergehenden Ansprüche,
**dadurch gekennzeichnet**,
daß die Auffangeinrichtung (26) eine mit einer Flüssigkeitsschicht (34) bedeckte trichterförmige Öffnung (32) aufweist oder dieser zugeordnet ist, wobei die Flüssigkeitsschicht lotrecht unterhalb der vorzugsweise auf konzentrisch zueinander verlaufenden Kreisen verlaufenden Austrittsöffnungen (18) der Düsenplatte (16) verläuft.

11. Vorrichtung nach zumindest einem der vorhergehenden Ansprüche,
**dadurch gekennzeichnet**,
daß in der Auffangeinrichtung (26) eine pilzförmig ausgebildete Flüssigkeitsverteileinrichtung koaxial zur Düsenplatte angeordnet ist und oberflächlich mit einer Flüssigkeitsschicht bedeckt ist, in die der zu Tropfen vertropfte Kunststoff eintritt.

12. Vorrichtung nach zumindest einem der vorhergehenden Ansprüche,
**dadurch gekennzeichnet**,
daß die Düseneinrichtung (12) von einer Isoliereinrichtung vorzugsweise beabstandet umgeben ist.

## Claims

1. A process for producing plastic particles, in which droplets (22) are formed out of the plastic supplied in free-flowing consistency by a nozzle unit (12) having at least one exit opening and then fall through a falling zone (24), at the end of which said droplets pass into a cooling liquid (26, 34) in which the droplets are cooled,
**characterized in that**
said plastic in molten liquid form is reduced to droplets by vibration excitation of said nozzle unit (12) and in that said cooling fluid (26, 34) is directed at said droplets (22) falling through said falling zone (24) such that said droplets enter said liquid tangentially or approximately tangentially or at least at an acute angle to the liquid surface.

2. A process according to Claim 1,
**characterized in that**
said cooling liquid (26, 34) has a temperature in the range of the Vicat temperature of the plastic droplets.

3. A process according to at least one of the preceding claims,
**characterized in that**
said droplets (22) enter a flowing liquid layer (34) having at least one laminar flow proportion.

4. A process according to at least one of the preceding claims,
**characterized in that**
said droplets (22) are subjected to an electromagnetic radiation in said falling zone (24).

5. A process according to at least one of the preceding claims,
**characterized in that**
said droplets (22) are irradiated with an electromagnetic radiation having a main spectral range at least corresponding to an absorption band of said plastic droplets.

6. A process according to at least one of the preceding claims,
**characterized in that**
said droplets are additionally heated by a laser beam.

7. A process according to at least one of the preceding claims,
**characterized in that**
a sinusoidal, sawtooth or rectangular pulse form is used for exciting vibration.

8. A device for producing plastic particles comprising a nozzle unit (12) having at least one exit opening, from which nozzle unit plastic supplied in free-flowing consistency exits in the form of droplets (22), and a collecting unit at a distance from the nozzle unit and containing a cooling liquid for the particles made of plastic,
**characterized in that**
said nozzle unit (12) is a vibrated nozzle plate that is aligned with its exit openings on a cooling liquid area of the collecting unit (26) in which said droplets enter tangentially or approximately tangentially or at least at an acute angle to the liquid surface.

9. A device according to Claim 8,
**characterized in that**
said nozzle unit in the form of a nozzle plate (16) has a large number of exit openings (18).

10. A device according to at least one of the preceding claims,
**characterized in that**
said collecting unit (26) has a funnel-like opening (32) covered with a liquid layer (34) or associated therewith, said liquid layer being perpendicular underneath the preferably concentrically arranged exit openings (18) of said nozzle plate (16).

11. A device according to at least one of the preceding claims,
**characterized in that**
in said collecting unit (26) a mushroom-shaped liquid distribution device is disposed coaxially to said nozzle plate and covered over its surface with a liquid layer into which said plastic droplets fall.

12. A device according to at least one of the preceding claims,
**characterized in that**
said nozzle unit (12) is surrounded by an insulating device preferably at a distance.

## Revendications

1. Procédé de fabrication de particules consistant en matière plastique, pendant lequel le plastique, présent en consistance coulante, est transformé en gouttelettes (22) par une installation de buse (12) d'au moins une sortie; ensuite les gouttelettes passent à travers une distance de chute (24), tombant à son bout dans un liquide de refroidissement (26, 34) dans lequel les gouttelettes sont réfrigérées,
**caractérisé en ce que**
la matière plastique en fusion est transformée en gouttelettes par des oscilla tions engendrées par l'installation de buse (12), et que le liquide de refroidis sement (26, 34) est aligné sur les gouttelettes (22) qui passent à travers la distance de chute (24) de manière que les gouttelettes y entrent tangentielle ment ou à peu près tangentiellement, ou au moins sous un angle aigu par rapport à la surface du liquide.

2. Procédé selon revendication 1,
**caractérisé en ce que**
le liquide de refroidissement (26, 34) présente une température située dans l'échelle de la température de Vicat du plastique transformé en gouttelettes.

3. Procédé selon au moins l'une des revendications précédentes,
**caractérisé en ce que**
les gouttelettes (22) entrent dans une couche de liquide coulante (34) présen tant au moins une portion d'écoulement laminaire.

4. Procédé selon au moins l'une des revendications précédentes,
**caractérisé en ce que**
les gouttelettes (22) sont exposées à un rayonnement électromagnétique en passant à travers la distance de chute (24).

5. Procédé selon au moins l'une des revendications précédentes,
**caractérisé en ce que**
les gouttelettes (22) sont irradiées par un rayonnement électromagnétique pré sentant au moins un domaine spectral principal qui correspond à une des ban des d'absorption du plastique transformé en gouttelettes.

6. Procédé selon au moins l'une des revendications précendentes,
**caractérisé en ce que**
les gouttelettes de plastique sont additionnellement chauffées par rayonnement laser.

7. Procédé selon au moins l'une des revendications précédentes,
**caractérisé en ce que**
pour l'amorçage des oscillations, une forme d'onde d'impulsion sinusoïdal, en dent de scie ou carrée est utilisée.

8. Installation de fabrication de particules consistant en matière plastique, conte nant une installation de buse d'au moins une sortie (12) dont sort le plastique antérieurement amené en consistance coulante, sous forme de gouttelettes (22), ainsi qu'un système collecteur contenant un liquide de refroidissement, installé à distance de la buse, pour réception des particules créés du plastique,
**caractérisé en ce que**
l'installation de buse (12) est une porte-filière mise en vibrations oscillantes, dont les sorties sont alignées sur une zone de liquide du système collecteur (26) dans laquelle les gouttelettes entrent tangentiellement ou à peu près tan gentiellement, ou au moins sous un angle aigu par rapport à la surface du li quide.

9. Installation selon revendication 8,
**caractérisé en ce que**
l'installation de buse sous forme d'une porte-filière (16) a un grand nombre de sorties (18).

10. Installation selon au moins l'une des revendications précédentes,
**caractérisé en ce que**
le système collecteur (26) présente une ouverture en entonnoir (32), ou est attribuée à celle-ci, couverte d'une couche de liquide (34), ce couche de liquide étant située verticalement au-dessous des sorties (18) de la porte-filière (16), positionnées de préférence sur des cercles à position concentrique l'un par rapport à l'autre.

11. Installation selon au moins l'une des revendications précédentes,
**caractérisé en ce que**
dans le système collecteur (26) se trouve un dispositif fongiforme de distribution de liquide, en position coaxiale par rapport à la porte-filière, dont la surface est couverte d'une couche de liquide dans laquelle entre le plastique transformé en gouttelettes.

12. Installation selon au moins l'une des revendications précédentes,
**caractérisé en ce que**
l'installation de buse (12) est entourée par une installation isolante, positionnée de préférence en distance.
